(19)

**Europäisches Patentamt**
**European Patent Office**
**Office européen des brevets**

(11) **EP 4 751 850 A1**

(12) **EUROPEAN PATENT APPLICATION**

(43) Date of publication:
**03.06.2026 Bulletin 2026/23**

(21) Application number: **25219739.7**

(22) Date of filing: **01.12.2025**

(51) International Patent Classification (IPC):
**B25B 23/14** *(2006.01)* **B25B 23/147** *(2006.01)*
**G05B 19/4065** *(2006.01)*

(52) Cooperative Patent Classification (CPC):
**G05B 19/4065; B25B 23/1405; B25B 23/147**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **02.12.2024 SE 2430614**

(71) Applicant: **Atlas Copco Industrial Technique AB 105 23 Stockholm (SE)**

(72) Inventors:
• **Aldenfalk Jansson, Staffan**
  **703 45 Örebro (SE)**
• **Nieto, Stephan**
  **11330 Stockholm (SE)**
• **Barkefors, Annea**
  **13138 Nacka (SE)**
• **Englin, Albin**
  **824 55 Hudiksvall (SE)**

(74) Representative: **Atlas Copco Industrial Technique AB**
**105 23 Stockholm (SE)**

(54) **METHOD AND DEVICE FOR DETECTING MAINTENANCE INDICATOR OF TIGHTENING TOOL**

(57) In an aspect, a method of a device (20, 35) is provided of detecting that a tightening tool (10) should be subjected to maintenance. The method comprises acquiring (S101) data indicating a tightening trace comprising torque and rotation angle values applied to a fastener being tightened during a tightening operation performed by the tightening tool (10), determining (S102) whether a selected section of the tightening trace is linear, and if so deriving (S103), from the linear section of the tightening trace, at least one value indicating the applied torque and acquiring a value indicating current consumed by the tool upon applying the torque, computing (S104) a ratio (k) between the at least one derived torque value and the value of the consumed current, comparing (S105) the computed ratio (k) with a correspondingly computed reference ratio (k_ref) of a previously performed tightening operation, and if the comparing of the ratios (k_ref - k) indicates that the consumed current is increasing above a preconfigured current threshold value (I1), determining that the tool (10) should be subjected to maintenance.

```
              ┌──────────────────────┐  ← S101
              │ Acquire tightening trace │
              └──────────────────────┘
                         │
                         ▼        ← S102
                    ╱ Section ╲   no
                   ╱  linear? ╲ ──────→ Tightening NOK
                    ╲         ╱
                         │ yes      Tightening OK
                         ▼
              ┌──────────────────────┐  ← S103
              │ Deriving values of applied │
              │ torque from the linear     │
              │ section and acquiring      │
              │ corresponding current      │
              │ values                     │
              └──────────────────────┘
                         │
                         ▼        ← S104
              ┌──────────────────────┐
              │   Compute ratio k     │
              └──────────────────────┘
                         │
                         ▼        ← S105
                   ╱ k_ref – k ╲  no
                  ╱   > T1?    ╲ ──────→ Tool OK
                   ╲          ╱
                         │ yes
                         ▼
                  Tool requires
                  maintenance
```

*Fig. 3*

EP 4 751 850 A1

## Description

## TECHNICAL FIELD

The present disclosure relates to a method of detecting that a tightening tool should be subjected to maintenance, and a device performing the method.

Further, a computer program is provided comprising computer-executable instructions for causing the device to perform steps of the method when the computer-executable instructions are executed on a processing unit included in the device.

Moreover, a computer program product is provided comprising a computer readable medium, the computer readable medium having the computer program embodied thereon.

## BACKGROUND

When an electrical tool is starting to wear, e.g. a tightening tool utilized for tightening of fasteners such as bolts or screws, the drive motor of the tool will typically become less efficient and thus consume more energy. Other parts of the tool such as angle gears may also become heavier for the motor to operate, also leading to increased energy consumption for the same tightening result.

A challenge is thus to detect such wear at an early stage of degradation of the tool.

## SUMMARY

One objective is to solve, or at least mitigate, this problem in the art and thus to provide an improved method of detecting that a tightening tool should be subjected to maintenance.

This objective is attained in a first aspect by a method of a device of detecting that a tightening tool should be subjected to maintenance. The method comprises acquiring data indicating a tightening trace comprising torque and rotation angle values applied to a fastener being tightened during a tightening operation performed by the tightening tool, determining whether a selected section of the tightening trace is linear, and if so deriving, from the linear section of the tightening trace, at least one value indicating the applied torque and acquiring a value indicating current consumed by the tool upon applying the torque, computing a ratio between the at least one derived torque value and the value of the consumed current, comparing the computed ratio with a correspondingly computed reference ratio of a previously performed tightening operation, and if the comparing of the ratios indicates that the consumed current is increasing above a preconfigured current threshold value, determining that the tool should be subjected to maintenance.

This objective is attained in a second aspect by a device configured to detect that a tightening tool should be subjected to maintenance, the device comprising a processing unit operative to cause the device to acquire data indicating a tightening trace comprising torque and rotation angle values applied to a fastener being tightened during a tightening operation by the tightening tool, determine whether a selected section of the tightening trace is linear, and if so to derive, from the linear section of the tightening trace, at least one value indicating the applied torque and acquiring a value indicating current consumed by the tool upon applying the torque, compute a ratio between the at least one derived torque value and the value of the consumed current, compare the computed ratio with a correspondingly computed reference ratio of a previously performed tightening operation and if the comparing of the ratios indicates that the consumed current is increasing above a preconfigured current threshold value, to determine that the tool should be subjected to maintenance.

Advantageously, an indication that the tool is starting to be worn has been detected and can thus be subjected to maintenance. It is further advantageous that such wear indicator is detected at an early stage, in order to avoid breakage of the tool causing unnecessary service downtime.

In an embodiment, if when comparing the computed ratio with the correspondingly computed reference ratio of a previously performed tightening operation, the consumed current is indicated to increase above a first preconfigured current threshold value, the tool is detected as being subjected to wear, while if the consumed current is indicated to increase above a higher second preconfigured current threshold value, the tool is detected as being faulty.

In an embodiment, it is determined that the tool should be subjected to maintenance if computed ratios of consecutive tightening operations indicate that the consumed current is increasing above the preconfigured current threshold value.

In an embodiment, it is determined that the tool should be subjected to maintenance if computed ratios of consecutive tightening operations indicate that the consumed current is increasing above the first preconfigured current threshold value but still remains below the higher second current preconfigured threshold value.

In an embodiment, the deriving, from the linear section of the tightening trace, of at least one value indicating the applied torque and acquiring a value indicating current consumed by the tool upon applying the torque comprises deriving a plurality of torque values and acquiring a corresponding number of values indicating the current at each applied torque; wherein the computing of the ratio comprises computing a ratio between a sum of the derived torque values and a sum of the acquired values of the consumed current.

In an embodiment, a lower torque limit is selected for the section of the tightening trace to be determined to be linear as a first percentage of a target torque to be applied, and wherein an upper torque limit is selected for the section of the tightening trace to be determined to be linear as a second higher percentage of the target torque to be applied.

In an embodiment, a lower torque limit is selected for the section of the tightening trace to be determined to be linear as an average of a torque applied during tool slowdown at an end of a tightening rundown phase and a target torque to be applied, and wherein an upper torque limit is selected for the section of the tightening trace to be determined to be linear as percentage of the target torque to be applied.

In an embodiment, in case the selected section of the tightening trace is determined not to be linear, the tightening is classified as not ok.

In an embodiment, low-pass filtering is applied to the torque and current values in order to remove noise before computing the ratio.

In an embodiment, an alert is provided indicating that the tool should be subjected to maintenance.

In an embodiment, if over a selected number of consecutively computed ratios the consumed current is indicated to be increasing above a current change threshold, the change is considered sudden, and the tool is detected as faulty.

In an embodiment, the comparing of the computed ratio with a correspondingly computed reference ratio of a previously performed tightening operation comprises computing the derivative of the computed ratio and the correspondingly computed reference ratio.

In a third aspect, a computer program is provided comprising computer-executable instructions for causing a tightening tool to perform steps recited in the method of the first aspect when the computer-executable instructions are executed on a processing unit included in the tightening tool.

In a fourth aspect, a computer program product is provided comprising a computer readable medium, the computer readable medium having the computer program according to the third aspect embodied thereon.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

## BRIEF DESCRIPTION OF THE DRAWINGS

Aspects and embodiments are now described, by way of example, with reference to the accompanying drawings, in which:

Figure 1 illustrates a tightening tool configured to apply a torque to a fastener, in which tool embodiments may be implemented;

Figure 2a illustrates a tightening trace of the tool according to an embodiment;

Figure 2b illustrates a ratio of applied torque and current consumption of the tool according to an embodiment;

Figure 3 shows a flowchart illustrating a method of detecting that a tightening tool should be subjected to maintenance according to an embodiment;

Figure 4 shows a flowchart illustrating a method of detecting that a tightening tool should be subjected to maintenance according to a further embodiment;

Figure 5a illustrates a tightening trace of the tool according to an embodiment;

Figure 5b illustrates a ratio of applied torque and current consumption of the tool according to an embodiment;

Figure 6a illustrates a tightening trace of the tool according to an embodiment; and

Figure 6b illustrates a ratio of applied torque and current consumption of the tool according to an embodiment.

## DETAILED DESCRIPTION

The aspects of the present disclosure will now be described more fully hereinafter with reference to the accompanying drawings, in which certain embodiments of the invention are shown.

These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

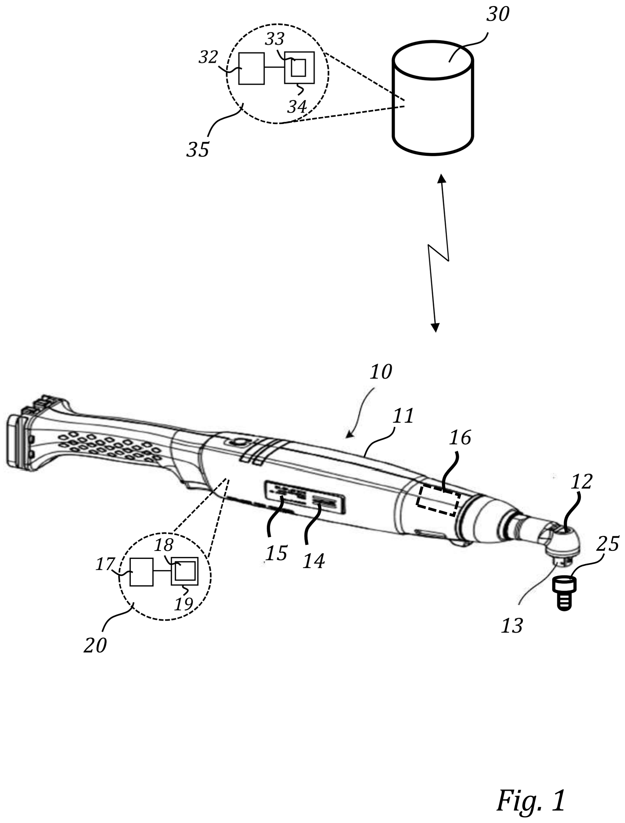

Figure 1 illustrates an industrial tool in the form of a tightening tool 10 configured to apply a torque to a fastener such as a bolt 25 for tightening a joint, for which tool embodiments may be implemented.

The tightening tool 10 may be cordless or electrically powered via a cord and has a main body 11 and a tool head 12. The tool head 12 has an output shaft 13 with a socket (not shown) configured to be rotatably driven by an electric motor 16 arranged inside the main body 11 to apply the torque to the bolt 25.

The tightening tool 10 may be arranged with a display 14 via which an operator of the tool 10 may be presented with information relating to operation of the tool 10, and an interface 15 via which the operator may input data to the tool 10.

The tightening tool 10 may further be equipped with a communication device in the form of a radio transmitter/receiver (not shown) for wirelessly transmitting operational data, such as applied torque, angles and/or current consumption to a remotely located controller such as a cloud server 30 or a device such as a server executing on the premises. Alternatively, communication between the tool 10 and the controller 30 may be undertaken via a wired connection.

Thus, the tool 10 may for instance communicate measured operational data to the controller 30 for further evaluation while the controller 30 e.g. may send operational settings to be applied by the tool 10 or instructions to be displayed to the operator via the display 14, or even automatically configure the tool 10. As is understood, the method of determining a configuration of the tool 10 according to embodiments may be performed in the tool 10 or in the cloud server 30 (or even in combination where some steps are performed in one device and others are performed in the other). Thus, the tool 10 is typically equipped with a control device 20 and the cloud server 30 comprises a similar control device 35 housing the same or similar data processing components, as will be described in the following.

The steps of the method to be described in the following as performed by the tool 10 and/or the cloud server 30 are in practice performed by a control device 20 and/or 35, respectively, comprising a processing unit 17, 32 embodied in the form of one or more microprocessors arranged to execute a computer program 18, 33 downloaded to a storage medium 19, 34 associated with the microprocessor, such as a Random Access Memory (RAM), a Flash memory or a hard disk drive. The processing unit 17, 32 is arranged to cause the tool 10 and/or cloud server 30 to carry out the method according to embodiments when the appropriate computer program 18, 33 comprising computer-executable instructions is downloaded to the storage medium 19, 34 and executed by the processing unit 17, 32. The storage medium 19, 34 may also be a computer program product comprising the computer program 18, 33. Alternatively, the computer program 18 may be transferred to the storage medium 19, 34 by means of a suitable computer program product, such as a Digital Versatile Disc (DVD) or a memory stick. As a further alternative, the computer program 18, 33 may be downloaded to the storage medium 19, 34 over a network. The processing unit 17, 32 may alternatively be embodied in the form of a digital signal processor (DSP), an application specific integrated circuit (ASIC), a field-programmable gate array (FPGA), a complex programmable logic device (CPLD), etc. The control device 20, 35 is communicatively connected to the interface for external communication, for instance from the tool 10 to the cloud server 30 and vice versa.

The control device 20 may be arranged inside the tightening tool 10 or in connection to the tool 10, for instance as a control device 20 attached to an external side of the main body 11 of the tool 10.

The processing unit 17 is in communicative connection with one or more internal sensors (not shown) for measuring the torque applied to the bolt 25 and a rotation angle of the output shaft 13 of the tightening tool 10 upon applying the torque, as well as a sensor measuring current consumption of the tool 10.

Now upon using the tightening tool 10 to tighten a fastener such as the bolt 25, it is important that the tightening operation is performed correctly for the tightened bolt 25 to maintain its fastening durability. If not, there is a risk that the tightening becomes poor which in worst case may cause the bolt 25 to unscrew. Thus, it is crucial that the bolt 25 is correctly tightened and if not, it is desirable to attain an indication accordingly such that the operator may utilize the tool 10 to correctly retighten the bolt 25. Commonly, an incorrect tightening is referred to as a not ok (NOK) tightening, while a correct tightening conversely is referred to as OK.

It is known that the measured torque of the tool 10 should ideally be directly proportional to the consumed current, i.e. torque = k*current during the part of the tightening operation where the tool is not slowing down or speeding up.

As previously mentioned, when the tool 10 is starting to wear, the drive motor 16 of the tool will typically become less efficient and thus consume more current/energy. Other parts of the tool 10 such as angle gears may also become heavier for the motor 16 to operate, also leading to increased energy consumption for the same tightening result. Such wear may be difficult to detect.

When the tool 10 is starting to wear down, the current consumption will increase. Hence, increasing current consumption with the same applied torque will cause k to decrease.

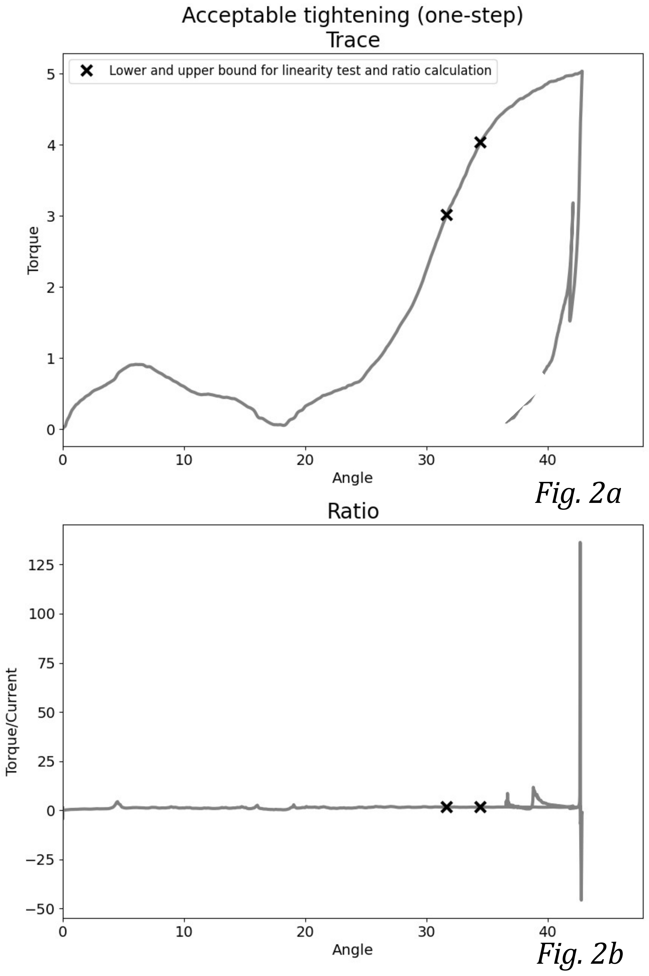

Figure 2a illustrates a curve referred to as a tightening trace of a tightening operation performed by the tool 10, which trace is formed by data indicating the torque and rotation angle applied to the bolt 25 during the tightening operation. As previously mentioned, such data may be collected by sensors in the tool 10. As can be seen, there are typically two phases during a tightening operation, a first is the *rundown phase,* in this illustration lasting up until a rotation angle value of approximately 25°, where the tool 10 operates at a high speed when the resistance of the joint to be tightened by the bolt 25 is low, and a second *end-tightening phase* where the tool 10 slows down as the torquing up proceeds. The second end-tightening phase lasts until just over 40° where the target torque is reached and the bolt 25 is properly fastened. Figure 2a illustrates a so-called one-step tightening approach, where the torque applied is increased continuously after the rundown phase.

Figure 2b illustrates the relation k between the torque and the recorded current consumption of the tool 10 for the trace over rotation angles applied by the tool.

Hence, as can be concluded from Figures 2a and 2b, even during a normal tightening operation for a tool 10 which has not yet been subjected to wear, k will vary during different stages of the operation. A correct decision as to whether or not the tool 10 has been subjected to wear can thus not be made by generally analysing the relationship between the applied torque and the current consumption.

The inventors have identified that there is only a narrow section of the tightening trace where there is a linear relationship between the applied torque and the consumed current.

Figure 2a illustrates this in an embodiment, where the linear relationship is identified during the end-tightening phase, in this example considered to occur approximately in the angle range of 32°-34°, as indicated by the cross-markings.

Figure 2b further illustrates the linear relationship between the applied torque and the consumed current for the sample range corresponding to this angle range of 32°-34°.

As is understood, while Figure 2b illustrates the relationship between the torque and current as k = torque/current, it may be envisaged that the ratio 1/k alternatively is analysed.

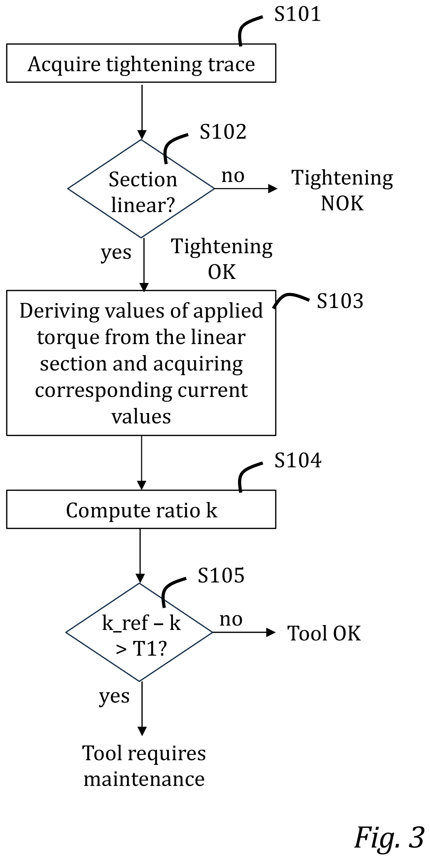

Figure 3 shows a flowchart illustrating a method of detecting wear of a tool according to an embodiment.

Hence, in a first step S101, data indicating a tightening trace such as that illustrated in Figure 2a is acquired, for instance by control device 20 having access to the measured torque and angle values forming the trace.

In S102, the control device 20 determines whether or not a selected section of the tightening trace is linear. As previously described, in the present example, the linear section is approximately between angles 32°-34° corresponding to a torque in the range of approximately 3-4 Nm.

For instance, this may be performed by determining the so-called r2-score of a linear regression fit applied to the curve between the two cross-markings of Figure 2a, where the r2-score is a measure of the goodness of fit of a line to the trace between the markings. As is understood, numerous methods are known for determining linearity of a curve.

If the selected section is not found to be linear in S102, the tightening is regarded as being NOK, which will be discussed in more detail below.

However, if the selected section of the trace indeed is found to be linear, the tightening is OK and the method proceeds to S103, where the control device 20 derives at least one value indicating the applied torque from the linear section of the tightening trace and further acquires a value indicating current consumed by the tool upon applying the torque (as previously has been described with reference to Figure 2b).

Now, while it is possible to compute the ratio k = torque/current based on a single torque and current value, it is advantageous to use a sum of values derived from the linear section between the cross-markings to avoid being affected by individual noise values, resulting in:

$$k = \mathrm{sum}(\mathrm{torque})/\mathrm{sum}(\mathrm{current}) \qquad (1)$$

Hence, it is preferred in S103 to derive a plurality of values indicating the applied torque from the linear section, and the corresponding current values for computing k.

Thus, in S104, the control device 20 computes the ratio k based on equation (1).

If a reference value *k_ref* of the ratio is computed during a tightening operation when the tool 10 is healthy and thus has not yet been subjected to wear, the ratio k computed for a current tightening operation can be compared in S105 to the reference value k_ref, and if there is a large enough decrease in the currently computed value for the ratio k as compared to the reference value k_ref, the control device 20 may conclude that the tool 10 should be subjected to maintenance.

For instance, the control device 20 may determine that the difference between the reference value k_ref and the current value of the ratio k exceeds a preconfigured current threshold value I1 (the difference should ideally be close to zero), i.e. k_ref - k > I1, then there is a sufficiently great increase in current to motivate taking the tool 10 out of operation for maintenance. In another example, the derivative of the reference value and the current value is computed, and if the computed derivate exceeds a threshold value, the tool 10 is taken out of operation for maintenance.

Advantageously, an indication that the tool 10 is starting to be worn has been detected and can thus be subjected to maintenance. It is further advantageous that such wear indicator is detected at an early stage, in order to avoid breakage of the tool 10 causing unnecessary service downtime.

As is understood, wear is typically a slow process where numerous tightening operations in practice need to be performed before a current value of the ratio k deviates from the reference value k_ref to such an extent that the tool 10 must be subjected to maintenance.

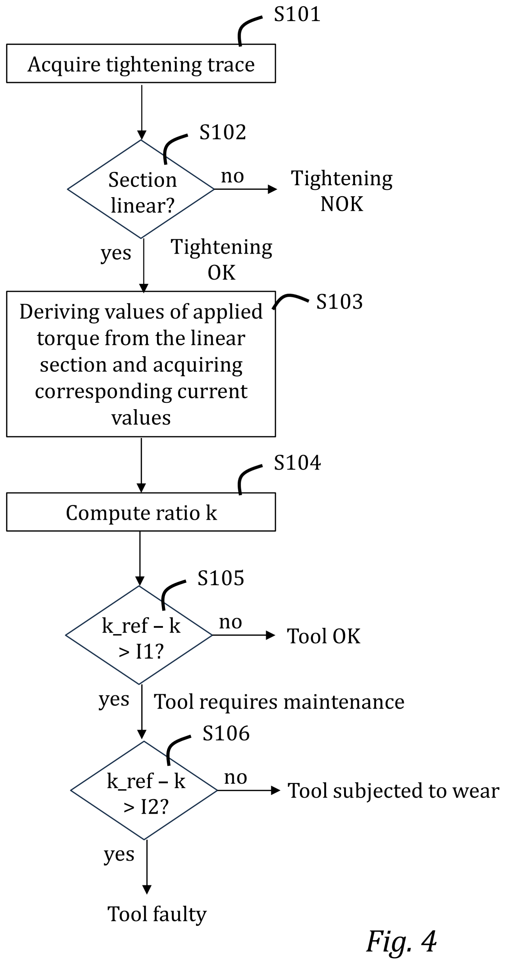

In an embodiment, it is envisaged that not only wear is detected, but further if the tool is faulty. With reference to the flowchart of Figure 4 where steps S101-S105 are identical to those described with reference to Figure 3, if there is a great difference between the reference ratio k_ref and the currently computed ratio k (or if a sudden change occurs, as discussed below) as determined in S106 indicating that the current has increased above a higher second preconfigured current threshold value I2, i.e. k_ref - k > I2, where I2 > I1, then the current consumed by the tool 10 has increased to such an extent that the control device 20 may conclude that the tool 10 is faulty and not just subjected to normal wear. In other words, the great increase in current consumption is likely not the result of normal wear but the result of a faulty tool 10. In such a scenario, the bolt 25 may have to be retightened and it may further be necessary to check previous tightenings.

In an embodiment, it is required that computed values of the ratio k for a plurality of subsequent tightening operations - such as at least two consecutive tightening operations - indicate that there is an increase in current when comparing a current value k to the reference value k_ref, at least for currents resulting in k_ref - k > I1 (but not necessarily for currents resulting in k_ref - k > I2).

This may advantageously prevent incorrectly taking a maintenance decision based on occasional outlier measurements of an individual tightening operation.

However, in case of a greater increase in current indicating a faulty tool, i.e. where k_ref - k > I2, it may be advisable to take the tool out of operation even if only a single tightening indicates that the current has increased substantially. If a tool is faulty, but still manages to run for a while before the fault is discovered, there may be inferior tightenings that must be resolved afterwards. It may also be envisaged that a small but sudden change occurs as detected in S106 or already in S105, such as over a few computed values of the ratio k. If so, even if the change is relatively small and does not exceed I2, the immediacy of the change occurring indicates a faulty tool. Thus, if over a few consecutively computed ratios k, the change is sufficiently high indicating an increase in consumed current, the tool 10 is detected as faulty. Thus, a current change threshold I3 (being smaller than I2) may be set and if the change in a selected number of consecutively computed ratios k exceeds the current change threshold 13, then the change is considered sudden, resulting in the tool 10 being detected as faulty.

In a further embodiment, low-pass filtering may be applied to derived torque and current values in order to further remove noise before computing k.

In an embodiment, in order to identify the linear section of the trace of Figure 2a, a lower torque limit l_0 and an upper torque limit l_1 is selected for the tightening trace corresponding to the two cross-markings. Thereafter, it is determined if the trace behaves linearly between the lower and the upper limits l_0, l_1.

As previously mentioned, this may e.g. be performed by determining the so-called r2-score of a linear regression fit applied to the curve between the two limits, where the r2-score is a measure of the goodness of fit of a line to the trace between l_0 and l_1.

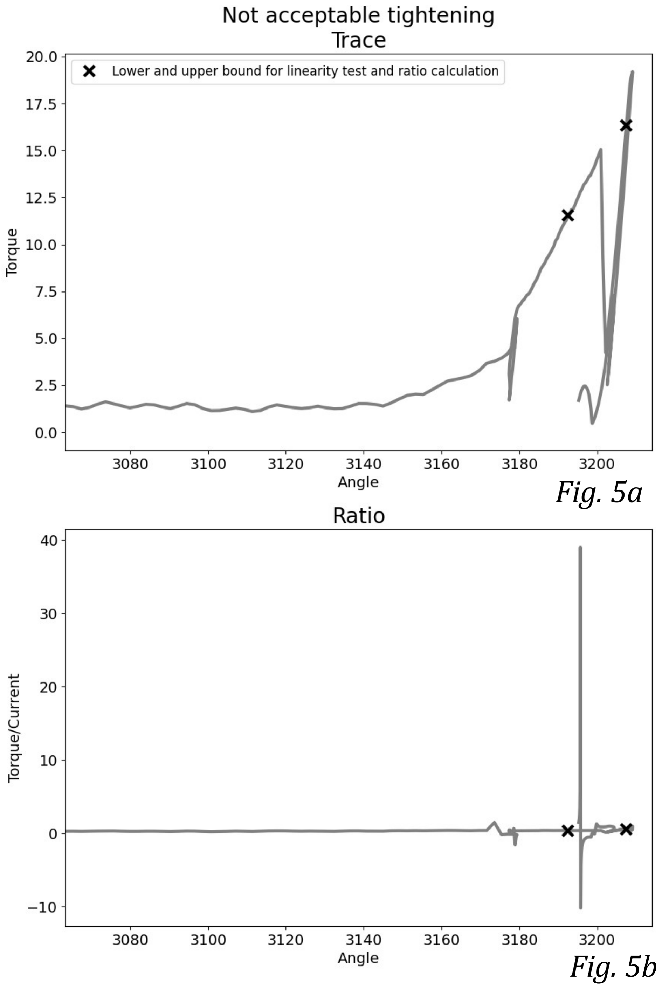

If the selected section of the trace is determined to be linear, the ratio k = sum(torque) / sum(current) is computed as discussed hereinabove for the torque and current values corresponding to the linear section of the tightening. i.e. the section indicated with cross-markings in Figure 2b. Otherwise, the tightening should be disregarded since there is a linearity issue, typically indicating that it is a NOK tightening. For instance, the NOK tightening may appear as illustrated by the trace in Figure 5a and corresponding torque-current ratio k illustrated in Figure 5b (using a different angle scale as compared to Figures 2a and 2b).

With reference to the tightening of Figure 5a and 5b; this tightening is typically not the result of the tool 10 being subjected to wear, or being faulty. Rather, this tightening represents the occasional incorrect tightening which still may pass as an OK tightening, even though such tightening ideally should be detected as NOK. Thus, in case the selected section of the tightening trace is determined in S102 not to be linear, the tightening is advantageously classified as NOK. This may be caused by operator behaviour, worn out fasteners, incorrect tool programming, etc.

In an embodiment, to select a section of the tightening trace to be determined to be linear, the shape of the trace is evaluated. For a one-step tightening operation as shown in Figure 2a, the trace will be mostly linear after the tool 10 has reached a constant speed after the rundown phase but before the tool 10 starts to slow down upon reaching its target torque. Thus, the limits may be selected to be e.g. l_0 = 0.6*T1, l_1 = 0.9*T1, where T1 represents the target torque (i.e. the maximum applied torque during a tightening operation).

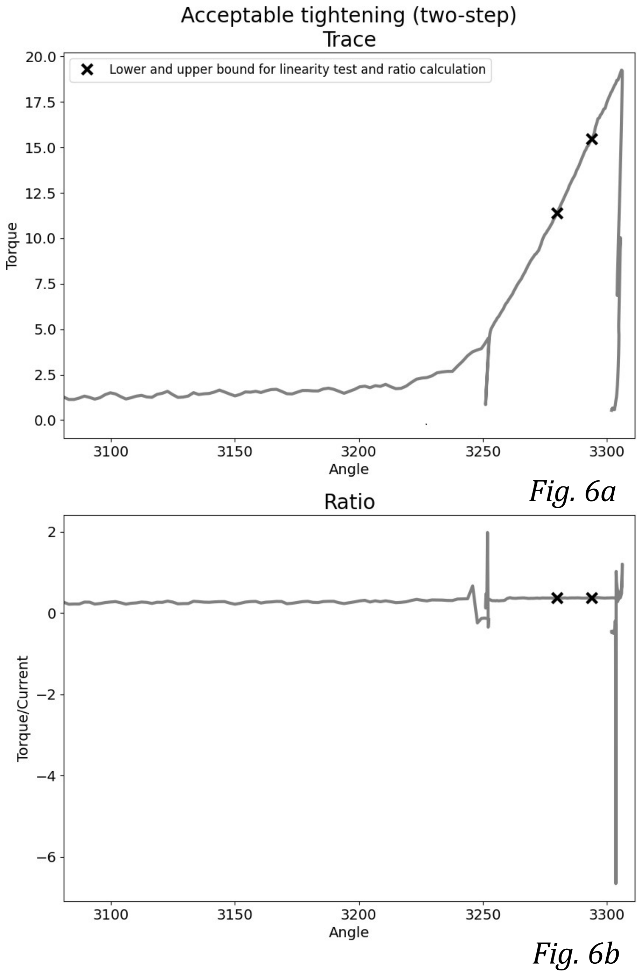

Figure 6a illustrates a tightening trace corresponding to that of Figure 2a (not with the same angle scale), but where a two-step tightening approach is used. In the two-step approach, the rundown phase is initially performed as previously described, then a first part of the tightening phase is undertaken before the tool is slowed down (or even stopped) before the speed again is increased in a second part of the tightening phase (i.e. the end-tightening phase) until the target torque is finally reached. Similar to Figure 2b, Figure 6b illustrates the relation k between the torque and the current consumption.

In the two-step approach, in order to take the temporary stopping of the tool 10 after the first part of the tightening phase into consideration, the lower limit is in an embodiment selected as l_0 = (T0+T1)/2, where T0 represents the applied torque where the tool 10 suddenly is slowed down (or stopped) after the first part of the tightening phase, while the upper limit l_1 still is selected to be l_1 = 0.9*T1. T0 and T1 can be found either from the program configuration or from the trace itself.

In an embodiment, a trained machine-learning (ML) model or artificial intelligence (AI) is used to determine from acquired torque and current values whether or not a tightening tool 10 should be subjected to maintenance. For instance, the upper and lower torque limits l_0, l_1 and the selection of the section of the curve, as well as the determining whether the section is linear or not and/or detecting a change in the ratio k, are task well-suited for ML and/or AI.

Any such ML and/or AI operations, as well as the performing of the steps S101- S106 of the method according to embodiments may be performed locally by the control device 20, or by the cloud server 30. The determining of whether or not maintenance should be performed may be immediately communicated to the operator of the tool 10 via e.g. the display 14. As a consequence, the operator may unscrew the bolt 25 and perform a new tightening program in order to attain an adequate tightening should the tool 10 be indicated to be faulty.

It is envisaged that the steps S101-S106 of the method according to embodiments may be performed by the control device 20 arranged in the tool 10 itself. However, it may also be envisaged that torque, angle and current values are measured by the tool 10 and then communicated via wireless transmitter to the cloud server 30 being equipped with a corresponding control device 35 for performing all steps S101-S106, which would relieve the processing unit 17 of the tool 10 from the computational burden.

The aspects of the present disclosure have mainly been described above with reference to a few embodiments and examples thereof. However, as is readily appreciated by a person skilled in the art, other embodiments than the ones disclosed above are equally possible within the scope of the invention, as defined by the appended patent claims.

Thus, while various aspects and embodiments have been disclosed herein, other aspects and embodiments will be apparent to those skilled in the art. The various aspects and embodiments disclosed herein are for purposes of illustration and are not intended to be limiting, with the true scope and spirit being indicated by the following claims.

## Claims

1. A method of a device (20, 35) of detecting that a tightening tool (10) should be subjected to maintenance, the method comprising:

    acquiring (S101) data indicating a tightening trace comprising torque and rotation angle values applied to a fastener being tightened during a tightening operation performed by the tightening tool (10);
    determining (S102) whether a selected section of the tightening trace is linear; and if so
    deriving (S103), from the linear section of the tightening trace, at least one value indicating the applied torque and acquiring a value indicating current consumed by the tool upon applying the torque;
    computing (S104) a ratio (k) between the at least one derived torque value and the value of the consumed current;
    comparing (S105) the computed ratio (k) with a correspondingly computed reference ratio (k_ref) of a previously performed tightening operation, and
    if the comparing of the ratios (k_ref - k) indicates that the consumed current is increasing above a preconfigured current threshold value (I1), determining that the tool (10) should be subjected to maintenance.

2. The method of claim 1, wherein if when comparing (S105, S106) the computed ratio (k) with the correspondingly computed reference ratio (k_ref) of a previously performed tightening operation, the consumed current is indicated to increase above a first preconfigured current threshold value (11), the tool (10) is detected as being subjected to wear, while if the consumed current is indicated to increase above a higher second preconfigured current threshold value (12), the tool (10) is detected as being faulty.

3. The method of claims 1 or 2, wherein it is determined that the tool (10) should be subjected to maintenance if computed ratios (k) of consecutive tightening operations indicate that the consumed current is increasing above the preconfigured current threshold value (I1).

4. The method of claims 2 and 3, wherein it is determined that the tool (10) should be subjected to maintenance if computed ratios (k) of consecutive tightening operations indicate that the consumed current is increasing above the first preconfigured current threshold value (I1) but still remains below the higher second current preconfigured threshold value (I2).

5. The method of any one of the preceding claims, wherein the deriving (S103), from the linear section of the tightening trace, of at least one value indicating the applied torque and acquiring a value indicating current consumed by the tool upon applying the torque comprises:
deriving a plurality of torque values and acquiring a corresponding number of values indicating the current at each applied torque; wherein the computing (S104) of the ratio (k) comprises:
computing a ratio between a sum of the derived torque values and a sum of the acquired values of the consumed current.

6. The method of any one of the preceding claims, wherein a lower torque limit (I_0) is selected for the section of the tightening trace to be determined to be linear as a first percentage (0.6*T1) of a target torque to be applied, and wherein an upper torque limit (I_1) is selected for the section of the tightening trace to be determined to be linear as a second higher percentage (0.9*T1) of the target torque to be applied.

7. The method of any one of claims 1-5, wherein a lower torque limit (I_0) is selected for the section of the tightening trace to be determined to be linear as an average ((T0+T1)/2) of a torque (T0) applied during tool slowdown at an end of a tightening rundown phase and a target torque (T1) to be applied, and wherein an upper torque limit (I_1) is selected for the section of the tightening trace to be determined to be linear as percentage (0.9*T1) of the target torque to be applied.

8. The method of any one of the preceding claims, wherein, in case the selected section of the tightening trace is determined (S102) not to be linear, the tightening is classified as not ok (NOK).

9. The method of any one of the preceding claims, further comprising applying low-pass filtering to the torque and current values in order to remove noise before computing (S104) the ratio (k).

10. The method of any one of the preceding claims, further comprising providing an alert indicating that the tool (10) should be subjected to maintenance.

11. The method of any one of the preceding claims, wherein if over a selected number of consecutively computed ratios (k) the consumed current is indicated to be increasing above a current change threshold (13), the change is considered sudden, and the tool (10) is detected as faulty.

12. The method of any one of the preceding claims, wherein the comparing (S105) of the computed ratio (k) with a correspondingly computed reference ratio (k_ref) of a previously performed tightening operation comprises computing the derivative of the computed ratio (k) and the correspondingly computed reference ratio (k_ref).

13. A computer program (18, 33) comprising computer-executable instructions for causing a device (20, 35) to perform steps recited in any one of claims 1-12 when the computer-executable instructions are executed on a processing unit (17, 32) included in the device (20, 35).

14. A computer program product comprising a computer readable medium (19, 34), the computer readable medium having the computer program (18, 33) according to claim 13 embodied thereon.

15. A device (20, 35) configured to detect that a tightening tool (10) should be subjected to maintenance, the device (20, 35) comprising a processing unit (17, 32) operative to cause the device (20, 35) to:

acquire (S101) data indicating a tightening trace comprising torque and rotation angle values applied to a fastener being tightened during a tightening operation by the tightening tool (10);
determine (S102) whether a selected section of the tightening trace is linear; and if so to
derive (S103), from the linear section of the tightening trace, at least one value indicating the applied torque and acquiring a value indicating current consumed by the tool upon applying the torque;
compute (S104) a ratio (k) between the at least one derived torque value and the value of the consumed current; and
compare (S105) the computed ratio (k) with a correspondingly computed reference ratio (k_ref) of a previously performed tightening operation, and
if the comparing of the ratios (k_ref - k) indicates that the consumed current is increasing above a preconfigured current threshold value (I1), to determine that the tool (10) should be subjected to maintenance.

Fig. 1

Fig. 2a

Fig. 2b

S101

Acquire tightening trace

S102

Section linear? —no→ Tightening NOK

yes | Tightening OK

S103

Deriving values of applied torque from the linear section and acquiring corresponding current values

S104

Compute ratio k

S105

k_ref – k > T1? —no→ Tool OK

yes

Tool requires maintenance

*Fig. 3*

Fig. 4

## Not acceptable tightening
## Trace

*Fig. 5a*

## Ratio

*Fig. 5b*

Fig. 6a

Fig. 6b

Europäisches
Patentamt

European
Patent Office

Office européen
des brevets

# EUROPEAN SEARCH REPORT

**Application Number**

EP 25 21 9739

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 4 235 006 A (ESHGHY SIAVASH [US]) 25 November 1980 (1980-11-25) ----- | 1-15 | INV. B25B23/14 B25B23/147 G05B19/4065 |
| A | WO 2023/110231 A1 (ATLAS COPCO IND TECHNIQUE AB [SE]) 22 June 2023 (2023-06-22) * claims 1-3,11-13,15 * * figures 1, 2b, 2d * * paragraph [0001] - paragraph [0003] * * paragraph [0005] - paragraph [0006] * * paragraph [0036] * * abstract * ----- | 1-15 | |
| A | EP 1 724 065 A1 (MAKITA CORP [JP]) 22 November 2006 (2006-11-22) * abstract * * claims 1-5, 9, 11 * * figures 1, 5-10 * * paragraph [0001] - paragraph [0008] * * paragraph [0010] - paragraph [0014] * * paragraph [0016] * * paragraph [0037] * * paragraph [0038] * * paragraph [0044] * * paragraph [0048] * * paragraph [0049] * ----- | 1-15 | |

|  |
|---|
| **TECHNICAL FIELDS SEARCHED (IPC)** |
| B25B G05B G07C |

The present search report has been drawn up for all claims

| Place of search | Date of completion of the search | Examiner |
|---|---|---|
| Munich | 2 April 2026 | Heinzelmann, Eric |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................

& : member of the same patent family, corresponding
document

EPO FORM 1503 03.82 (P04C01)

**EP 4 751 850 A1**

## ANNEX TO THE EUROPEAN SEARCH REPORT
## ON EUROPEAN PATENT APPLICATION NO.

EP 25 21 9739

This annex lists the patent family members relating to the patent documents cited in the above-mentioned European search report.
The members are as contained in the European Patent Office EDP file on
The European Patent Office is in no way liable for these particulars which are merely given for the purpose of information.

02-04-2026

| Patent document cited in search report | | Publication date | Patent family member(s) | | Publication date |
|---|---|---|---|---|---|
| US 4235006 | A | 25-11-1980 | NONE | | |
| WO 2023110231 | A1 | 22-06-2023 | CN | 118434539 A | 02-08-2024 |
| | | | EP | 4448223 A1 | 23-10-2024 |
| | | | SE | 2130370 A1 | 18-06-2023 |
| | | | US | 12169151 B1 | 17-12-2024 |
| | | | WO | 2023110231 A1 | 22-06-2023 |
| EP 1724065 | A1 | 22-11-2006 | EP | 1724065 A1 | 22-11-2006 |
| | | | EP | 2111951 A2 | 28-10-2009 |
| | | | JP | 4906236 B2 | 28-03-2012 |
| | | | JP | 2005254400 A | 22-09-2005 |
| | | | US | 2008230245 A1 | 25-09-2008 |
| | | | US | 2009241744 A1 | 01-10-2009 |
| | | | WO | 2005087441 A1 | 22-09-2005 |

EPO FORM P0459

For more details about this annex : see Official Journal of the European Patent Office, No. 12/82